# EUROPEAN PATENT APPLICATION

(11) **EP 4 475 263 A1**
(43) Date of publication of application: **11.12.2024**
(21) Application number: 23901022.6
(22) Date of filing: 04.12.2023
(51) Int. Cl.: H01M 10/0583, H01M 10/04, H01M 50/46, H01M 10/052

(54) **ELECTRODE ASSEMBLY AND MANUFACTURING METHOD THEREFOR**

(30) Priority: 07.12.2022 KR 20220169261
(71) Applicant: LG Energy Solution, Ltd., Seoul 07335 (KR)
(72) Inventor: LEE, So Yeong, Daejeon 34122 (KR); BAE, Won Sik, Daejeon 34122 (KR); LEE, Byeong Kyu, Daejeon 34122 (KR)
(74) Representative: Plasseraud IP
(86) International application number: PCT/KR2023/019748
(87) International publication number: WO 2024/123003

(57) **Abstract**

The present disclosure provides an electrode assembly including a first unit electrode assembly to an n-th unit electrode assembly (n is a natural number of 3 or more), wherein the unit electrode assembly has cathodes and anodes alternately disposed between separators folded in a zigzag manner, the cathodes and the anodes are each bonded to adjacent separators, and the i+1-th unit electrode assembly (i is a natural number of 1 to n-1) is stacked on the i-th unit electrode assembly, and a method for manufacturing the same.

## Description

### [TECHNICAL FIELD]

The present disclosure relates to an electrode assembly including a zigzag-type separator and a method for manufacturing the same.

### [BACKGROUND ART]

Electrochemical devices convert chemical energy into electrical energy using an electrochemical reaction, and recently, lithium secondary batteries, which have high energy density and voltage, have a long cycle life, and can be used in various fields, have been widely used. Recently, as demand for electric vehicles and energy storage devices increases, development for materials and structures is being made to maximize capacity and energy density.

Secondary batteries may include an electrode assembly including a cathode, an anode, and a separator disposed between the cathode and the anode, and may be manufactured by storing the electrode assembly in a case together with an electrolyte solution. Secondary batteries may be divided into a pouch-shaped secondary battery, a cylindrical secondary battery, a prismatic secondary battery, a coin-shaped secondary battery, etc. depending on the shape of the case in which the electrode assembly is stored, and may be classified into a jelly-roll type secondary battery, a stack-type secondary battery, etc. depending on the manufacturing method or shape of the electrode assembly.

Recently, a zigzag stacking type electrode assembly has been developed in which a cathode and an anode are alternately disposed between adjacent bends while bending a long sheet-shaped separator in a zigzag shape. For example, when a zigzag-type electrode assembly is supplied with a long sheet-shaped separator wound around a cylinder, it can be manufactured in such a manner that each electrode is disposed between the separator while folding the separator in a zigzag manner by tilting or swinging the table on which the electrode assembly is stacked or reciprocating the supply roll that transfers the separator. Zigzag stacking has the advantage of excellent productivity as the process is simple compared to other types.

The zigzag-type electrode assembly can be manufactured through a first heat press step of disposing electrodes between separators and then applying heat and pressure to the electrode assembly to fix the position of the electrodes relative to the separator, and a second heat press step of additionally applying heat and pressure to the heat-pressed electrode assembly so that the separator and electrodes are completely bonded. However, when an electrode assembly into which multiple electrodes are inserted is heat-pressed, heat and pressure are not uniformly transmitted to the central part of the electrode assembly, causing a difference in adhesive force depending on the position. The difference in adhesive force depending on the position of the electrode assembly not only leads to the separation of the electrodes and separator, but also leads to low stiffness of the electrochemical device, causing a safety problem. To solve this problem, when heat and pressure are increased, the separator positioned on the outer portion of the electrode assembly has problems of decreased air permeability and increased electrical resistance due to excessive compression.

### [DETAILED DESCRIPTION OF INVENTION]

### [TECHNICAL PROBLEM]

An object of the present disclosure is to provide a zigzag-type electrode assembly in which bonding of electrodes and a separator is uniformly implemented up to the central part and a method for manufacturing the same.

### [TECHNICAL SOLUTION]

One aspect of the present disclosure provides an electrode assembly including a first unit electrode assembly to an n-th unit electrode assembly (n is a natural number of 3 or more), wherein the unit electrode assembly has cathodes and anodes alternately disposed between separators folded in a zigzag manner, the cathodes and the anodes are each bonded to adjacent separators, and the i+1-th unit electrode assembly (i is a natural number of 1 to n-1) is stacked on the i-th unit electrode assembly.

The first unit electrode assembly to the n-1-th unit electrode assembly may include m cathodes and m anodes (m is a natural number of 1 to 20), and the n-th unit electrode assembly may include m cathodes and m+1 anodes.

m may be a natural number of 5 to 10.

The electrode assembly may further include an outermost separator enveloping the first to n-th unit electrode assemblies.

The electrode assembly may have a long side whose length is 1.8 to 5.5 times the length of a short side.

Another aspect of the present disclosure provides a method for manufacturing the electrode assembly, the method including steps of (S10) forming a stack by alternately disposing cathodes and anodes between the separators while folding the separator in a zigzag manner, (S20) applying heat and pressure to the stack and thus bonding the cathodes and the separators, and the anodes and the separators, thereby manufacturing unit electrode assemblies, and (S30) stacking a plurality of the unit electrode assemblies.

The electrode assembly may include a first unit electrode assembly to an n-th unit electrode assembly (n is a natural number of 3 or more), the first unit electrode assembly to an n-1-th unit electrode assembly may include the cathodes and the anodes in equal numbers, and the n-th unit electrode assembly may include the anodes that are one more in number than the cathodes.

The manufacturing method may further include a step (S40) of enveloping the plurality of stacked unit electrode assemblies with a separator.

The step (S20) may be applying a pressure of 1 to 4 MPa to the stack at a temperature of 45 to 80°C for 1 to 30 seconds.

The stack may have a thickness of 2 to 9.5 mm.

Another aspect of the present disclosure provides an electrochemical device including the electrode assembly.

### [EFFECT OF INVENTION]

The zigzag-type electrode assembly of the present disclosure can improve the safety of the electrochemical device including the electrode assembly by providing a structure in which bonding of the electrodes and separator are uniformly implemented throughout the top part, central part, and bottom part while maintaining the advantage of excellent productivity.

### [BRIEF DESCRIPTION OF THE DRAWINGS]

FIG. 1 is a conceptual diagram showing a process for manufacturing a unit electrode assembly according to one embodiment of the present disclosure.
FIG. 2 is a conceptual diagram showing a process for manufacturing an electrode assembly according to one embodiment of the present disclosure.
FIG. 3(A) is a front view of an electrode assembly according to one embodiment of the present disclosure, and FIG. 3(B) is a perspective view of the electrode assembly.
FIG. 4 is a conceptual diagram showing the process of experimenting the stiffness of an electrode assembly according to one embodiment of the present disclosure, FIG. 4(A) is a conceptual diagram showing the experiment preparation process, and FIG. 4(B) is a conceptual diagram showing the process of measuring the bent length (M) of the electrode assembly.

### [BEST MODE FOR CARRYING OUT THE INVENTION]

Hereinafter, each configuration of the present disclosure will be described in more detail so that those skilled in the art to which the present disclosure pertains can easily implement it, but this is only one example, and the scope of rights of the present disclosure is not limited by the following contents.

The term "include" used in this specification is used when listing materials, compositions, devices, and methods useful in the present disclosure and is not limited to the listed examples.

"About" and "substantially" used in this specification are used to mean a range of numerical values or degrees, or approximations thereof by taking into account unique manufacturing and material tolerances, and are used in order to prevent infringers from unfairly exploiting the disclosure in which precise or absolute numerical values provided to aid understanding of the present disclosure are mentioned.

Hereinafter, one embodiment of the present disclosure will be described in detail with reference to the attached drawings. The drawings may be exaggerated, omitted, or schematically shown to explain or emphasize the content of one embodiment of the present disclosure.

One embodiment of the present disclosure provides an electrode assembly including a first unit electrode assembly to an n-th unit electrode assembly (n is a natural number of 3 or more), wherein the unit electrode assembly has cathodes and anodes alternately disposed between separators folded in a zigzag manner, the cathodes and the anodes are each bonded to adjacent separators, and the i+1-th unit electrode assembly (i is a natural number of 1 to n-1) is stacked on the i-th unit electrode assembly.

The unit electrode assembly may be manufactured by heat-pressing a stack in which the cathodes and anodes are alternately disposed between the separators folded in a zigzag manner.

The separator may refer to a functional separator in which a porous coating layer containing an inorganic material and a binder is formed on at least one surface of a porous substrate such as a polyolefin substrate or non-woven fabric, but is not limited thereto. The separator may collectively refer to a freestanding separator formed of an inorganic material and a binder without a porous substrate.

The porous polymer substrate may electrically insulate the cathodes and anodes to provide pores through which lithium ions can pass while preventing short circuits. The porous polymer substrate may have resistance to an electrolyte solution of the electrochemical device, which is an organic solvent. For example, the porous polymer substrate may include polymer resins such as polyolefin-based polymer resins such as polyethylene, polypropylene, and polybutene, polyvinyl chloride, polyethylene terephthalate, polycycloolefin, polyethersulfone, polyamide, polyimide, polyimideamide, polyaramid , nylon, polytetrafluoroethylene, and copolymers or mixtures thereof, but is not limited thereto.

The porous polymer substrate may have a thickness of 1 to 100 µm. Specifically, the porous polymer substrate may have a thickness of 10 µm or more to 95 µm or less, 15 µ m or more to 90 µm or less, 20 µm or more to 85 µm or less, 25 µm or more to 80 µm or less, 30 µm or more to 75 µm or less, 35 µm or more to 70 µm or less, 40 µm or more to 65 µm or less, 45 µm or more to 60 µm or less, 50 µm or more to 65 µm or less, or 55 µm or more to 60 µm or less. Preferably, it may have a thickness of 1 to 30 µm, and more preferably 15 to 30 µm. The volume of the electrochemical device can be minimized, and the cathodes and anodes can be electrically insulated by adjusting the thickness of the porous polymer substrate within the above-described range.

The porous polymer substrate may include pores with an average diameter of 0.01 to 10 µm. Specifically, the pores included in the polymer substrate may have a size of 10 nm or more to 95 nm or less, 10 nm or more to 90 nm or less, 15 nm or more to 85 nm or less, 20 nm or more to 80 nm or less, 25 nm or more to 75 nm or less, 30 nm or more to 70 nm or less, 35 nm or more to 65 nm or less, 40 nm or more to 60 nm or less, or 45 nm or more to 55 nm or less. Preferably, the pores included in the polymer substrate may have a size of 10 nm or more to 60 nm or less. The permeability of lithium ions can be adjusted by adjusting the pores included in the porous polymer substrate within the above-described range.

A slurry may be applied and dried on at least one surface of the porous polymer substrate to form a porous coating layer, which will be described later. The slurry may contain a polymer binder, inorganic particles, a dispersion medium, etc. The porous coating layer may contain inorganic particles for improving the mechanical properties and insulation properties of the porous polymer substrate and a polymer binder for improving adhesive force between the electrodes and the separator. The polymer binder may provide adhesive force between the electrodes and the separator, and at the same time, may bond adjacent inorganic particles and maintain the bond. The inorganic particles may combine with adj acent inorganic particles to provide an interstitial volume, which is a void between the inorganic particles, and lithium ions may move through the interstitial volume.

The porous coating layer may have a thickness of 2 to 20 µm. Specifically, the porous coating layer may have a thickness of 2 µm or more to 19 µm or less, 3 µm or more to 18 µm or less, 4 µm or more to 17 µm or less, 5 µm or more to 16 µm or less, 6 µm or more to 15 µm or less, 7 µm or more to 14 µm or less, 8 µm or more to 13 µm or less, 9 µm or more to 12 µm or less, or 10 µm or more to 11 µm or less. Shrinkage of the porous polymer substrate may be prevented at high temperatures by adjusting the thickness of the porous coating layer within the above-described range and thus adjusting the thickness of the separator for an electrochemical device and implementing weight reduction at the same time. The separator in which the porous coating layer is formed on both surfaces of the porous polymer substrate may have a thickness of 6 to 36 µm.

The separator containing the polymer binder may be heat-pressed with the electrodes to form an electrode assembly, thereby exhibiting adhesive force between the electrodes and the separator. The adhesive force between the electrodes and the separator may be 40 to 100 gf/20 mm in the absence of an electrolyte solution (dry state), and 10 to 40 gf/20 mm in a state impregnated with an electrolyte solution (wet state). Specifically, the dry state adhesive force may be 45 gf/20 mm or more to 95 gf/20mm or less, 50 gf/20 mm or more to 90 gf/20 mm or less, 55 gf/20 mm or more to 85 gf/20 mm or less, 60 gf/20 mm or more to 80 gf/20 mm or less, or 65 gf/20 mm or more to 75 gf/20 mm or less. Specifically, the wet state adhesive force may be 15 gf/20 mm or more to 35 gf/20 mm or less, or 20 gf/20 mm or more to 30 gf/20 mm or less. When each adhesive force satisfies the above-described range, the electrolyte impregnation of the separator may be performed uniformly without precipitation of lithium dendrites on the surface of the separator.

One known in the art, such as an acrylic binder or a fluorine-based binder may be used as the polymer binder. The inorganic particles may uniformly form a thickness of the porous coating layer and do not cause a redox reaction within the operating voltage range of an electrochemical device applied. For example, those known in the art as ones having one or more properties of lithium ion transfer ability, piezoelectricity, and flame retardancy may be used as the inorganic particles.

The cathode and anode may mean those in which an electrode active material is applied and dried on at least one surface of a conductive material without causing a chemical change in an electrochemical device. The types of the material and electrode active material are not limited as long as they can be used in the electrochemical device. The cathode and anode may have a thickness of 12.5 to 15.5 µm, respectively. Specifically, each electrode may have a thickness of 13 µm or more to 15 µm or less, or 13.5 µm or more to 14.5 µm or less. Preferably, each electrode may have a thickness of 14 µm or more to 15 µm or less. It may be possible to secure the desired capacity of the electrochemical device and prevent deformation of the separator at the same time by adjusting the thickness of the electrodes within the above-described range.

The separator is folded in a zigzag manner at predetermined intervals, and the intervals are not limited as long as they can prevent the cathode and anode from contacting each other, but are preferably constant intervals. The electrodes are stacked in a state in which both surfaces are enveloped by the separator, and may be bonded to adjacent separators by heat pressing. For example, the separator and the electrodes may be bonded through heat pressing by containing the same or different types of binders. Bonding the cathodes and anodes to adjacent separators, respectively, means that the electrodes and the separator are bonded within a single electrode assembly.

The i+1-th unit electrode assembly (i is a natural number of 1 to n-1) may be stacked on the i-th unit electrode assembly. Stacking of unit electrode assemblies is not accomplished through adhesion. For example, the unit electrode assemblies may be disposed so that the n-th unit electrode assembly is stacked on the n-1-th unit electrode assembly, but the separators or electrodes are aligned with each other. The electrode assembly may include n unit electrode assemblies, thereby having a structure in which the cathodes and anodes are alternately stacked with the separator being therebetween.

The first unit electrode assembly to the n-1-th unit electrode assembly may include m cathodes and anodes (m is a natural number of 1 to 20), and the n-th unit electrode assembly may include m cathodes and m+1 anodes. Preferably, m may be a natural number of 5 to 20, and most preferably, m may be a natural number of 5 to 10.

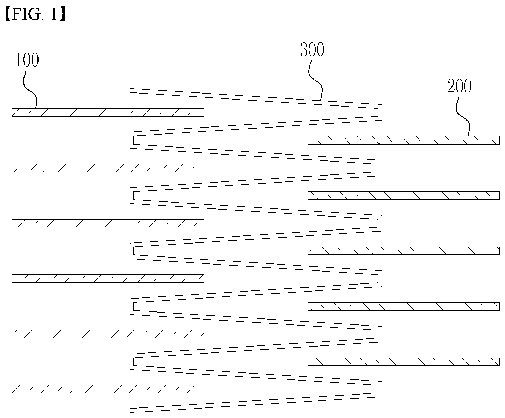

FIG. 1 is a conceptual diagram showing the process of manufacturing the n-th unit electrode assembly by exemplifying the case where m is 5. The n-th unit electrode assembly may be manufactured by alternately inserting the anodes 100 and the cathodes 200 between the separators 300 folded in a zigzag manner and heat-pressing them. The n-th unit electrode assembly may include five cathodes 200 and six anodes 100, and the separator 300 envelopes the anodes 100 and the cathodes 200 and thus does not expose the electrodes to the outside.

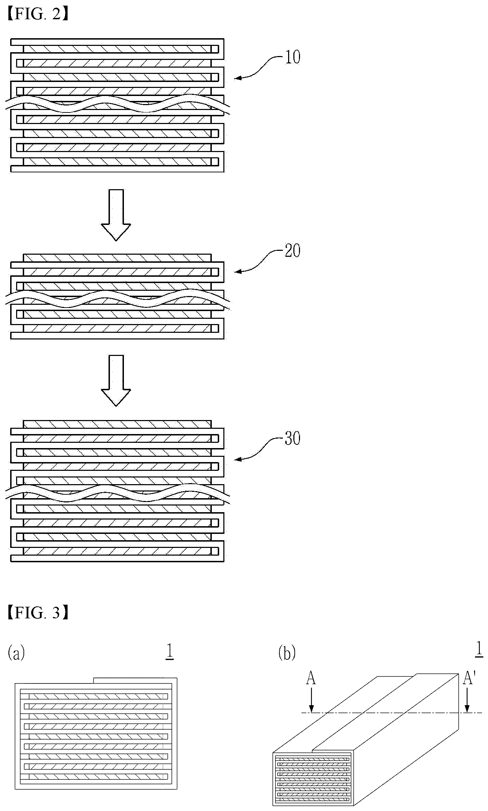

FIG. 2 is a conceptual diagram showing the process of manufacturing an electrode assembly by exemplifying the case where n is 3. The second unit electrode assembly 20 may be stacked on the first unit electrode assembly 10, and the third unit electrode assembly 30 may be stacked on the second unit electrode assembly 20.

Referring to FIG. 2, in the electrode assembly, the electrodes located at the uppermost end and the lowermost end of the stacked electrodes may be the anodes. For example, the first to n-1-th unit electrode assemblies may be ones which are stacked starting from the anode on the separator of the lowermost end, and in which the cathode is disposed at the uppermost end. The anode may be enveloped by a separator, and the cathode may have one surface exposed to the outside. While stacking the second unit electrode assembly on the first unit electrode assembly, the anode of the second unit electrode assembly and the uppermost cathode of the first unit electrode assembly may be stacked with the lowermost separator of the second unit electrode assembly being interposed therebetween.

FIG. 3(A) is a front view of the completed electrode assembly, and FIG. 3(B) is a perspective view. Referring to FIG. 3(A), the electrode assembly may further include an outermost separator enveloping the first to n-th unit electrode assemblies. The outermost separator may be prepared separately from that included in the unit electrode assembly, but is not limited thereto. For example, although not shown, the outermost separator may be one in which one end of the separator included in the first unit electrode assembly or the n-th unit electrode assembly is extended. The outermost separator may envelope the unit electrode assemblies to prevent the unit electrode assemblies from being separated. For example, the outermost separator may envelope the unit electrode assembly and then be bonded to one or more of the outermost separator or the separator included in the unit electrode assembly to secure the unit electrode assemblies.

Referring to FIG. 3(B), the electrode assembly may have long and short sides of different lengths. Based on the stacked surface of the electrodes, the length of the long side may be 1.8 to 5.5 times the length of the short side.

The electrode assembly may be applied to an electrochemical device. The electrochemical device may be manufactured by inserting the electrode assembly into a pouch or case, injecting an electrolyte solution, and then sealing the pouch or case.

The electrolyte solution may be a non-aqueous electrolyte solution containing a lithium salt. The electrolyte solution is composed of an electrolyte solution and a lithium salt, and non-aqueous organic solvents, organic solid electrolytes, inorganic solid electrolytes, etc. may be used as the electrolyte solution.

The shape of the case or pouch for inserting the electrode assembly is not limited. For example, the electrochemical device may be a cylindrical, prismatic, coin-shaped, or pouch-shaped lithium secondary battery. The lithium secondary battery is unit cells and may be packaged or modularized to be used in small devices such as computers, mobile phones, and power tools including ones that are powered and moved by an electric motor; electric cars including electric vehicles (EVs), hybrid electric vehicles (HEVs), plug-in hybrid electric vehicles (PHEVs), etc.; electric two-wheeled vehicles including electric bicycles (E-bikes) and electric scooters (E-scooters); electric golf carts; and medium to large-sized devices such as power storage systems.

Another embodiment of the present disclosure provides a method for manufacturing the electrode assembly, the method including steps of (S10) forming a stack by alternately disposing cathodes and anodes between the separators while folding the separator in a zigzag manner, (S20) applying heat and pressure to the stack and thus bonding the cathodes and the separators, and the anodes and the separators, thereby manufacturing unit electrode assemblies, and (S30) stacking a plurality of the unit electrode assemblies. The content that is the same as the description of the electrode assembly described above among the descriptions of the method for manufacturing an electrode assembly is replaced with the description of the previous embodiment.

The step (S10) is a step of forming a stack by alternately disposing cathodes and anodes between the bends formed while folding the separator in a zigzag manner. The length of the separator in the longitudinal direction (or MD direction; machine direction) may be longer than the length in the width direction (or TD direction; transverse direction). The separator may be folded in a zigzag manner at predetermined intervals along the MD direction.

The separator, the cathode, and the anode may each have a rectangular shape, but are not limited thereto. For example, the separator, the cathode, and the anode may each have a rectangular shape of which length in the MD direction is longer than that in the TD direction. Pluralities of the cathodes and the anodes may be disposed along the MD direction of the separator, and may be disposed so that the MD direction of the separator and the TD direction of the cathodes and the anodes are parallel to each other. Preferably, the cathodes and the anodes may be aligned so that their respective center lines in the TD direction coincide.

The step (S20) is a step of heat-pressing the stack formed in the step (S10). The stack may have a thickness of 2 to 9.5 mm. Specifically, the stack may have a thickness of 2.5 mm or more to 9 mm or less, 3 mm or more to 8.5 mm or less, 3.5 mm or more to 8 mm or less, 4 mm or more to 7.5 mm or less, 4.5 mm or more to 7 mm or less, or 5 mm or more to 6.5 mm or less. Uniform bonding of all electrodes and separator constituting the stack may be implemented according to heat pressing by adjusting the thickness of the stack within the above-described range. Heat and pressure may be applied to the stack to bond the cathode and the separator, and bond the anode and the separator, thereby manufacturing one unit electrode assembly. The heat pressing may be compressing the uppermost end and lowermost end of the stack using a press device, and may be applying a pressure of 1 to 4 MPa to one or more stacks at a temperature of 45 to 80°C for 1 to 30 seconds. Specifically, the heat pressing may be applying a temperature of 45°C or higher to 75°C or lower, 50°C or higher to 70°C or lower, or 55°C or higher to 65°C or lower, and a pressure of 1.5 MPa or higher to 3.5 MPa or lower, or 2 MPa or higher to 3 MPa or lower to one or more stacks. Preferably, the heat pressing may be applying a pressure of 2 to 3 MPa at a temperature of 45 to 60°C for 1 to 30 seconds. Uniform bonding of the separator and electrodes constituting the stack may be implemented without causing damage to the stack by adjusting the temperature and pressure conditions of heat pressing within the above-described range. The type of the press device is not limited as long as it can bond the separator and the electrodes by simultaneously or nonsimultaneously applying heat and pressure to one or both surfaces of the stack while maintaining the alignment of the separator and electrodes included in the stack.

A unit electrode assembly manufactured from a stack containing m or m+1 (m is a natural number of 1 to 20) cathodes and anodes in the above temperature, pressure, and time ranges may exhibit an adhesive force difference of less than 15 gf/20 mm. The adhesive force may encompass the adhesive force (dry adhesive force) under dry conditions without an electrolyte solution after manufacturing the unit electrode assembly and the adhesive force (wet adhesive force) between the electrodes and the separator under conditions impregnated with the electrolyte solution after manufacturing the unit electrode assembly, and it may be a value measured by peeling off the electrodes and separator at a predetermined speed. If the difference in adhesive force exceeds 15 gf/20 mm, the stiffness of the electrochemical device including the unit electrode assembly may be greatly reduced, making it impossible to ensure the safety of the electrochemical device.

Preferably, the unit electrode assembly manufactured from a stack containing m or m+1 (m is a natural number of 1 to 20) cathodes and anodes in the above temperature, pressure, and time ranges may exhibit less than 15% of a dry adhesive force difference and less than 5% of a wet adhesive force difference. The dry adhesive force difference exhibits the difference between the maximum value and minimum value of adhesive force between the electrodes and the separator under dry conditions without an electrolyte solution after manufacturing the unit electrode assembly, as a percentage of the maximum value. The wet adhesive force difference exhibits the difference between the maximum value and minimum value of adhesive force between the electrodes and the separator under the condition of being impregnated with an electrolyte solution after manufacturing the unit electrode assembly, as a percentage of the maximum value. For example, the adhesive force may exhibit a maximum value at the outermost part (uppermost end or lowermost end) and a minimum value at the central part based on the thickness direction of the unit electrode assembly. It is preferable that heat and pressure are uniformly transmitted to the central part of the unit electrode assembly so that the difference in adhesive force is exhibited to be small. If the bonding between the electrodes and the separator is not solid, even if the dry adhesive force difference is exhibited to be less than 15%, the wet adhesive force difference may be exhibited to be 5% or more depending on the electrolyte solution injection.

The manufacturing method according to this embodiment may achieve more excellent productivity by reducing the number of heat pressing cycles compared to the conventional method for manufacturing a zigzag-type electrode assembly, which involves primary and secondary heat pressing, by heat-pressing one or more unit electrode assemblies simultaneously in one press device in the step (S20). For example, the first unit electrode assembly to the n-th unit electrode assembly may be manufactured with only one heat pressing cycle after placing n stacks on one press device, and the electrode assembly may be prepared by simply stacking the manufactured unit electrode assemblies.

The manufacturing method according to this embodiment may achieve more excellent production efficiency by heat-pressing one or more unit electrode assemblies simultaneously in one press device in the step (S20), thereby relaxing heat pressing conditions compared to the conventional method for manufacturing a zigzag-type electrode assembly, which involves primary and secondary heat pressing. For example, since the stack includes a smaller number of electrodes compared to existing methods, it is possible to manufacture a unit electrode assembly that is evenly bonded up to the central part even under lower temperature and pressure conditions than conventional methods. Relatively low temperature and pressure may prevent damage to the separator positioned at the outermost part of the unit electrode assembly.

The step (S30) is a step of forming an electrode assembly by stacking the unit electrode assemblies manufactured in the step (S20). An electrode assembly may be formed by stacking n unit electrode assemblies by a method of aligning and stacking the i+1-th unit electrode assembly (i is a natural number of 1 to n-1) on the i-th unit electrode assembly. The electrode assembly may have a structure in which m cathodes and m+1 anodes are alternately disposed between zigzag-type separators. The electrode assembly may be inserted into the pouch or case of the electrochemical device without passing through additional heat pressing.

The manufacturing method may further include a step (S40) of enveloping the plurality of stacked unit electrode assemblies with a separator. The separator is the outermost separator described above, and may be one in which one end of the separator included in the unit electrode assembly is extended, or one which is prepared separately.

Hereinafter, the present disclosure will be described in more detail through specific Examples and Experimental Example. The following Examples and Experimental Example are intended to illustrate the present disclosure, and the present disclosure is not limited by the following Examples and Experimental Example.

### Example 1

A separator with a thickness of 15 µm coated with a slurry containing an inorganic material and a binder was prepared, and 30 cathodes with a size of 90 mm × 315 mm and a thickness of 15 µm and 31 anodes with a size of 95.5 mm × 320 mm and a thickness of 15 µm were prepared respectively. While folding the separator in a zigzag manner at 98.5 mm intervals, six anodes and six cathodes were alternately disposed to prepare four stacks, and seven anodes and six cathodes were alternately disposed to prepare one stack.

Five of the above stacks were held on a press device and heat-pressed once for 20 seconds at 60°C and a pressure of 3 MPa to simultaneously manufacture five unit electrode assemblies. An electrode assembly was prepared by stacking unit electrode assemblies so that the uppermost end and lowermost end electrodes became the anodes.

### Example 2

An electrode assembly was prepared in the same manner as in Example 1 except that two stacks were prepared by alternately disposing 10 anodes and 10 cathodes while folding the separator in a zigzag manner, and one stack was prepared by alternately disposing 11 anodes and 10 cathodes.

### Comparative Example 1

One stack was prepared by using the same type and number of separators, cathodes, and anodes as those used in Example 1, but alternately disposing 31 anodes and 30 cathodes while folding the separator in a zigzag manner.

The position of the electrodes with respect to the separator was fixed by holding the stack on a press device, and primarily heat-pressing the stack at 60°C and a pressure of 2.5 MPa for 20 seconds to partially bond the cathodes and the separator, and the separator and the anodes. Subsequently, the stack was secondarily heat-pressed at 60°C and a pressure of 3 MPa for 20 seconds to completely bond the separator and the electrodes, thereby preparing an electrode assembly.

### Comparative Example 2

One stack was prepared by using the same type and number of separator, cathodes, and anodes as those used in Example 1, but alternately disposing 31 anodes and 30 cathodes while folding the separator in a zigzag manner.

The stack was held on a press device and heat-pressed once under the same conditions as in Example 1 to manufacture a unit electrode assembly.

### Comparative Example 3

Five stacks were prepared in the same manner as in Example 1.

The five stacks were held on a press device, primarily heat-pressed at 60°C and a pressure of 2 MPa for 1 minute, and secondarily heat-pressed at 70°C and a pressure of 3 MPa for 30 seconds to manufacture five unit electrode assemblies at the same time. An electrode assembly was prepared by stacking unit electrode assemblies so that the uppermost end and lowermost end electrodes became the anodes.

### Comparative Example 4

Three stacks were prepared in the same manner as in Example 2.

The three stacks were held on a press device, primarily heat-pressed at 60°C and a pressure of 2 MPa for 1 minute, and secondarily heat-pressed at 70°C and a pressure of 3 MPa for 30 seconds to manufacture three unit electrode assemblies at the same time. An electrode assembly was prepared by stacking unit electrode assemblies so that the uppermost end and lowermost end electrodes became the anodes.

### Comparative Example 5

The same type and number of separator, cathodes, and anodes as those used in Example 1 were used, but one stack was prepared by alternately disposing 15 anodes and 15 cathodes while folding the separator in a zigzag manner, and one stack was prepared by alternately disposing 16 anodes and 15 cathodes.

The two stacks were held on a press device, primarily heat-pressed at 60°C and a pressure of 2 MPa for 1 minute, and secondarily heat-pressed at 70°C and a pressure of 3 MPa for 30 seconds to manufacture two unit electrode assemblies at the same time. An electrode assembly was prepared by stacking unit electrode assemblies so that the uppermost end and lowermost end electrodes became the anodes.

### Comparative Example 6

Two stacks were prepared in the same manner as in Comparative Example 5.

The two stacks were held on a press device and heat-pressed once under the same conditions as in Example 1 to simultaneously manufacture two unit electrode assemblies. An electrode assembly was prepared by stacking unit electrode assemblies so that the uppermost end and lowermost end electrodes became the anodes.

### Experiment Example

### Manufacturing conditions of electrode assembly

The manufacturing processes of the electrode assemblies manufactured in Examples and Comparative Examples and the times required to manufacture the electrode assemblies are summarized in Table 1 below.

When an electrode assembly was formed by preparing one stack without forming unit electrode assemblies, the number (n) of the unit electrode assemblies was expressed as 0. Although not described, the number of anodes included per unit electrode assembly is one more (m+1) than the number (m) of cathodes, and the heat pressing method was divided into primary and secondary ones according to the number of heat pressing cycles. The time (tact time, s) required to manufacture an electrode assembly represents the total time required to insert an electrode between the separators and produce one finished electrode assembly product through heat pressing and lamination.

### Check dry adhesive force distribution of electrode-separator

After cutting the center of the electrode assemblies manufactured in Examples and Comparative Examples, the adhesive forces between the electrodes and the separators were checked. Referring to FIG. 3(B), the electrode assembly was cut along line AA' and divided into two halves. The adhesive forces when peeling off the separators from the cathodes while peeling off the separators or electrodes of the cut electrode assemblies layer by layer at a speed of 90° and 200 mm/min were measured and summarized in Table 1 below.

Starting from the uppermost end of the electrode assemblies, 10 cathodes each were divided into 3 groups, and thus referred to as the top part (top), central part (middle), and bottom part (bottom), and the average adhesive forces were described.

### Check wet adhesive force distribution of electrode-separator

The electrode assemblies cut as described above were placed in a pouch, sealed by injecting an electrolyte solution (EC/EMC 3/7), and then simulated in the pre-heat and prepressure (PP) process of battery manufacturing so that a temperature of 70°C and a pressure of 5 kgf/cm² were applied for 5 minutes. After tearing the pouch and recovering the electrode assemblies, the adhesive forces, when peeling off the separators from the cathodes while peeling off the separators or electrodes of the cut electrode assemblies layer by layer at a speed of 90° and 200 mm/min, were measured and shown in Table 1 below.

Starting from the uppermost end of the electrode assemblies, 10 cathodes each were divided into 3 groups, and thus referred to as the top part (top), central part (middle), and bottom part (bottom), and the average adhesive forces were described.

### Check stiffness of electrode assemblies

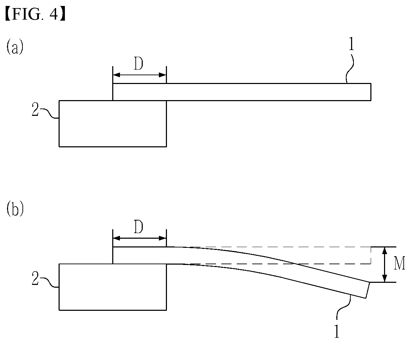

FIG. 4 is a conceptual diagram showing an experimental process for checking the stiffness of an electrode assembly. As shown in FIG. 4(A), the electrode assembly 1 was placed on the table 2 by a length of D (10 cm), and the D portion was pressed to prevent the electrode assembly 1 from falling off the table 2. As shown in FIG. 4(B), the length (M) at which one end of the electrode assembly bends in the vertical direction was measured. If the bending length (M) exceeds 2 cm, it is bad, if it is 0.5 to 2 cm, it is good, and if it is less than 0.5 cm, it is considered very good, and they are summarized in Table 1 below.

**[Table 1]**

| | Comparative Example 1 | Comparative Example 2 | Comparative Example 3 | Comparative Example 4 | Comparative Example 5 | Comparative Example 6 | Example 1 | Example 2 |
|---|---|---|---|---|---|---|---|---|
| Number of unit electrode assemblies (n) | 0 | 0 | 5 | 3 | 2 | 2 | 5 | 3 |
| Number of cathodes per unit electrode assembly (m) | 30 | 30 | 6 | 10 | 15 | 15 | 6 | 10 |
| Heat pressing method | 2 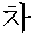 | 1 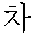 | 2 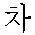 | 2 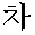 | 2 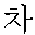 | 1 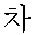 | 1 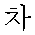 | 1 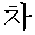 |
| Tact time (s) | 102 | 49 | 102 | 102 | 102 | 49 | 49 | 49 |
| Dry adhesive force (Top/middle/bottom) (gf/20 mm) | 52/5/55 | 50/8/48 | 51/50/55 | 52/50/50 | 53/18/50 | 52/10/50 | 54/52/55 | 50/48/55 |
| Wet adhesive force (Top/middle/bottom) (gf/20 mm) | 30/0/30 | 29/1/32 | 31/33/32 | 30/28/32 | 33/5/32 | 28/2/34 | 33/33/34 | 24/25/25 |
| Stiffness | bad | bad | very good | good | bad | bad | very good | good |

Referring to Table 1, the electrode assemblies according to the Examples greatly reduce the electrode assembly manufacturing times through batch manufacturing of the unit electrode assemblies through simultaneous one time heat pressing of multiple stacks, and have a dry adhesive force difference of 5.5 to 12.7% and a wet adhesive force difference of 2.9 to 4%, confirming that uniform bonding was achieved in the thickness direction of the electrode assemblies. Accordingly, the stiffnesses of the manufactured electrode assemblies were also found to be excellent.

On the other hand, as a stack containing 30 cathodes was used in Comparative Examples 1 and 2, sufficient dry adhesive force and wet adhesive force were not secured at the central part of the electrode assembly regardless of the number of heat pressings, and the stiffness was also found to be inferior.

In Comparative Examples 3 to 5, it took longer to manufacture the electrode assemblies than in the Examples as the unit electrode assemblies were heat-pressed twice after manufacturing, and Comparative Example 4 was excellent with 4% of dry adhesive force difference, but showed 12.5% of wet adhesive force difference, confirming that uniform bonding was not achieved to an extent of sufficiently ensuring wet adhesive force.

**[DESCRIPTION OF REFERENCE NUMERALS]**

| | | | |
|---|---|---|---|
| 1: | Electrode assembly | 2: | Table |
| 10: | First unit electrode assembly | 20: | Second unit electrode assembly |
| 30: | Third unit electrode assembly | 100: | Anode |
| 200: | Cathode | 300: | Separator |

## Claims

1. An electrode assembly comprising a first unit electrode assembly to an n-th unit electrode assembly (n is a natural number of 3 or more),
wherein the unit electrode assembly has cathodes and anodes alternately disposed between separators folded in a zigzag manner,
the cathodes and the anodes are each bonded to adjacent separators, and
the i+1-th unit electrode assembly (i is a natural number of 1 to n-1) is stacked on the i-th unit electrode assembly.

2. The electrode assembly of claim 1,
wherein the first unit electrode assembly to the n-1-th unit electrode assembly comprise m cathodes and m anodes (m is a natural number of 1 to 20), and
the n-th unit electrode assembly comprise m cathodes and m+1 anodes.

3. The electrode assembly of claim 2, wherein m is a natural number of 5 to 10.

4. The electrode assembly of claim 1, wherein the electrode assembly further comprises an outermost separator enveloping the first to n-th unit electrode assemblies.

5. The electrode assembly of claim 1, wherein the electrode assembly has a long side whose length is 1.8 to 5.5 times the length of a short side.

6. A method for manufacturing an electrode assembly, the method comprising steps of:
(S10) forming a stack by alternately disposing cathodes and anodes between the separators while folding the separator in a zigzag manner;
(S20) applying heat and pressure to the stack and thus bonding the cathodes and the separators, and the anodes and the separators, thereby manufacturing unit electrode assemblies; and
(S30) stacking a plurality of the unit electrode assemblies.

7. The method of claim 6,
wherein the electrode assembly includes a first unit electrode assembly to an n-th unit electrode assembly (n is a natural number of 3 or more),
the first unit electrode assembly to an n-1-th unit electrode assembly comprise the cathodes and the anodes in equal numbers, and
the n-th unit electrode assembly comprises the anodes that are one more than the cathodes.

8. The method of claim 7, further comprising a step (S40) of enveloping the plurality of stacked unit electrode assemblies with a separator.

9. The method of claim 6, wherein the step (S20) is applying a pressure of 1 to 4 MPa to the stack at a temperature of 45 to 80°C for 1 to 30 seconds.

10. The method of claim 6, wherein the stack has a thickness of 2 to 9.5 mm.
